# EUROPÄISCHE PATENTSCHRIFT

(11) **EP 4 323 218 B1**
(45) Veröffentlichungstag und Bekanntmachung des Hinweises auf die Patenterteilung: **30.10.2024**
(21) Anmeldenummer: 22714464.9
(22) Anmeldetag: 31.03.2022
(51) Int. Cl.: B60K 6/48, B60K 6/365, B60K 6/547

(54) **HYBRIDANTRIEBSSYSTEM FÜR EIN KRAFTFAHRZEUG SOWIE KRAFTFAHRZEUG**
HYBRID DRIVE SYSTEM FOR A MOTOR VEHICLE, AND MOTOR VEHICLE
SYSTÈME D'ENTRAÎNEMENT HYBRIDE POUR UN VÉHICULE AUTOMOBILE ET VÉHICULE AUTOMOBILE

(30) Priorität: 12.04.2021 DE 102021001879
(43) Veröffentlichungstag der Anmeldung: 21.02.2024
(73) Patentinhaber: Mercedes-Benz Group AG, 70372 Stuttgart (DE)
(72) Erfinder: GITT, Carsten, 70437 Stuttgart (DE); HAERTER, Tobias, 70174 Stuttgart (DE); HAHN, Peter, 70374 Stuttgart (DE); KOLB, Andreas, 73249 Wernau (DE); RIEDL, Klaus, 72074 Tübingen (DE); SCHILDER, Tobias, 71640 Ludwigsburg (DE); ZEIBIG, Jonathan, 73630 Remshalden (DE)
(74) Vertreter: Novagraaf Group
(86) Internationale Anmeldenummer: PCT/EP2022/058661
(87) Internationale Veröffentlichungsnummer: WO 2022/218724

(56) Entgegenhaltungen:
- WO-A1-2015/137124
- DE-A1- 102010 042 005
- US-A1- 2007 275 815
- US-A1- 2009 275 437

## Beschreibung

Die Erfindung betrifft ein Hybridantriebssystem für ein Kraftfahrzeug gemäß dem Oberbegriff von Patentanspruch 1. Des Weiteren betrifft die Erfindung ein Kraftfahrzeug mit einem solchen Hybridantriebssystem.

Der DE 10 2019 208 556 A1, der DE 10 2007 054 359 A1, der EP 0 787 926 A2 sind jeweils Getriebe für eine Hybridantriebsanordnung als bekannt zu entnehmen.

Die US 2009 / 0 275 437 A1, DE 11 2006 001 124 T5 und die DE 10 2010 042 005 A1 zeigen darüber hinaus Hybridantriebssysteme, jeweils mit einem Getriebe, welches einen vierwelligen ersten Planetensatz sowie einen separat von dem vierwelligen Planetensatz ausgeführten zweiten Planetensatz aufweisen.

Aufgabe der vorliegenden Erfindung ist es, ein Hybridantriebssystem für ein Kraftfahrzeug, insbesondere für einen Kraftwagen, sowie ein Kraftfahrzeug zu schaffen, so dass eine besonders bauraum- und kostengünstige Bauweise des Hybridantriebssystems realisiert werden kann.

Diese Aufgabe wird durch ein Hybridantriebssystem mit den Merkmalen des Patentanspruchs 1 sowie durch ein Kraftfahrzeug mit den Merkmalen des Patentanspruchs 12 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Hybridantriebssystem für ein Kraftfahrzeug, insbesondere für einen vorzugsweise als Personenkraftwagen ausgebildeten Kraftwagen. Dies bedeutet, dass das Kraftfahrzeug in seinem vollständig hergestellten Zustand das auch als Hybridantriebseinrichtung bezeichnete oder als Hybridantriebseinrichtung ausgebildete Hybridantriebssystem umfasst und mittels des Hybridantriebssystems antreibbar ist. Das Hybridantriebssystem umfasst eine auch als Verbrennungsmotor bezeichnete Verbrennungskraftmaschine, welche eine erste Abtriebswelle aufweist. Vorzugsweise ist die Verbrennungskraftmaschine als eine Hubkolbenmaschine beziehungsweise als ein Hubkolbenmotor ausgebildet, so dass die erste Abtriebswelle vorzugsweise eine Kurbelwelle ist. Über die erste Abtriebswelle kann die Verbrennungskraftmaschine auch als erste Antriebsmomente oder erste Antriebsdrehmomente bezeichnete, erste Drehmomente zum Antreiben des Kraftfahrzeugs bereitstellen. Das Hybridantriebssystem umfasst außerdem eine elektrische Maschine, welche einen Rotor mit einer Rotorwelle aufweist. Die Rotorwelle ist eine zweite Abtriebswelle, oder die Rotorwelle wird auch als zweite Abtriebswelle bezeichnet. Über die Rotorwelle kann die elektrische Maschine auch als zweite Antriebsmomente oder zweite Antriebsdrehmomente bezeichnete, zweite Drehmomente zum Antreiben des Kraftfahrzeugs bereitstellen. Beispielsweise weist die elektrische Maschine einen Stator auf, mittels welchem der Rotor antreibbar ist. Der Rotor ist um eine Maschinendrehachse relativ zu dem Stator drehbar. Die Rotorwelle ist eine zweite Abtriebswelle, oder die Rotorwelle wird auch als zweite Abtriebswelle bezeichnet. Vorzugsweise ist die elektrische Maschine eine Hochvolt-Komponente, deren elektrische Spannung, insbesondere elektrische Betriebs- oder Nennspannung, vorzugsweise größer als 50 Volt, insbesondere größer als 60 Volt, ist und ganz vorzugsweise mehrere hundert Volt beträgt. Dadurch können besonders große elektrische Leistungen zum, insbesondere rein, elektrischen Antreiben des Kraftfahrzeugs realisiert werden. Insbesondere ist die elektrische Maschine in einem Motorbetrieb und somit als Elektromotor betreibbar, mittels welchem das Kraftfahrzeug, insbesondere rein, elektrisch angetrieben werden kann. Somit stellt die elektrische Maschine in ihrem Motorbetrieb das jeweilige, zweite Antriebsmoment zum Antreiben des Kraftfahrzeugs bereit.

Das Hybridantriebssystem umfasst ein Getriebe, welches einen vierwelligen, ersten Planetensatz aufweist. Unter dem Merkmal, dass der erste Planetensatz, welcher auch erster Planetenradsatz bezeichnet wird, ein vierwelliger Planetensatz ist, ist insbesondere zu verstehen, dass der erste Planetensatz wenigstens oder vorzugsweise genau vier Wellen aufweist, über die ein jeweiliges Drehmoment in den ersten Planetensatz einleitbar und/oder aus dem ersten Planetensatz ausleitbar ist. Das Getriebe umfasst außerdem einen insbesondere zusätzlich zu dem ersten Planetensatz vorgesehenen, zweiten Planetensatz, welcher auch als zweiter Planetenradsatz bezeichnet wird. Des Weiteren umfasst das Getriebe ein erstes Schaltelement, ein zweites Schaltelement und ein drittes Schaltelement. Das Getriebe umfasst außerdem eine dritte Abtriebswelle, über welche auch als Abtriebsmomente oder Abtriebsdrehmomente bezeichnete Drehmomente aus dem Getriebe ausgeleitet werden können. Mit anderen Worten kann das Getriebe über seine dritte Abtriebswelle Abtriebsdrehmomente zum Antreiben des Kraftfahrzeugs bereitstellen. Beispielsweise resultiert das jeweilige Abtriebsmoment aus dem jeweiligen ersten Antriebsmoment und/oder dem jeweiligen zweiten Antriebsmoment. Die Wellen des vierwelligen, ersten Planetensatzes werden auch als erste Welle, zweite Welle, dritte Welle und vierte Welle bezeichnet. Dabei weist der zweite Planetensatz ein erstes Element, ein zweites Element und ein drittes Element auf. Die Elemente des zweiten Planetensatzes werden beispielsweise auch als Getriebeelemente bezeichnet. Insbesondere kann es sich bei den Elementen des zweiten Planetensatzes um ein Sonnenrad, einen auch als Steg bezeichneten Planetenträger und ein Hohlrad des zweiten Planetensatzes handeln. Die erste Welle, die zweite Welle, die dritte Welle und die vierte Welle sind, insbesondere um eine Planetensatzdrehachse, relativ zueinander und beispielsweise relativ zu einem Gehäuse des Hybridantriebssystems drehbar. Dabei ist es denkbar, dass der erste Planetensatz und/oder der zweite Planetensatz jeweils zumindest teilweise in dem Gehäuse angeordnet sind. Die erste Welle, die zweite Welle, die dritte Welle und die vierte Welle sind mittels eines Verblockungsschaltelements des Hybridantriebssystems drehfest miteinander verbindbar. Dabei ist es denkbar, dass das Verblockungsschaltelement zusätzlich zu den zuvor genannten Schaltelementen vorgesehen und somit ein viertes Schaltelement ist, oder das Verblockungsschaltelement ist durch eines der zuvor genannten Schaltelemente gebildet. Die Planetensatzdrehachse wird auch einfach als Drehachse bezeichnet.

Die erste Abtriebswelle ist drehfest mit der ersten Welle gekoppelt oder koppelbar. Hierunter ist insbesondere zu verstehen, dass die erste Abtriebswelle permanent drehfest mit der ersten Welle verbunden ist, oder die erste Abtriebswelle ist drehfest mit der ersten Welle verbindbar.

Im Rahmen der vorliegenden Offenbarung ist unter dem Merkmal, dass zwei Bauelemente drehfest miteinander verbunden sind, zu verstehen, dass die Bauelemente koaxial zueinander angeordnet und derart miteinander verbunden sind, dass sie mit gleicher Winkelgeschwindigkeit gemeinsam um eine den Bauelementen gemeinsame Bauelementdrehachse drehen.

Unter dem Merkmal, dass die beziehungsweise zwei Bauelemente permanent drehfest miteinander verbunden sind, ist zu verstehen, dass nicht etwa ein Umschaltelement vorgesehen ist, welches zwischen einem die Bauelemente drehfest miteinander verbindenden Koppelzustand und einem die Bauelemente für eine insbesondere um die Bauelementdrehachse erfolgende Drehung relativ zueinander freigebenden Entkoppelzustand umschaltbar ist, sondern die Bauelemente sind stets beziehungsweise permanent drehfest miteinander verbunden.

Unter dem Merkmal, dass die beziehungsweise zwei Bauelemente drehfest miteinander verbindbar sind, ist zu verstehen, dass den Bauelementen ein Umschaltelement zugeordnet ist, welches zwischen wenigstens einem Koppelzustand und wenigstens einem Entkoppelzustand umschaltbar ist. In dem Koppelzustand sind die Bauelemente mittels des Umschaltelements fest miteinander verbunden. In dem Entkoppelzustand sind die Bauelemente voneinander entkoppelt, so dass in dem Entkoppelzustand die Bauelemente relativ zueinander insbesondere um die Bauelementdrehachse drehbar sind.

Bei dem Hybridantriebssystem ist es außerdem vorgesehen, dass die Rotorwelle derart mit der zweiten Welle, insbesondere drehfest, gekoppelt oder koppelbar ist, dass von der Rotorwelle ausgehende beziehungsweise bereitgestellte Drehmomente, wie beispielsweise die zweiten Antriebsmomente, über die zweite Welle in das Getriebe einleitbar sind beziehungsweise eingeleitet werden. Des Weiteren ist es vorgesehen, dass die dritte Welle mittels des ersten Schaltelements drehfest mit der dritten Abtriebswelle verbindbar ist. Hierunter ist insbesondere Folgendes zu verstehen: Das erste Schaltelement ist zwischen einem ersten Koppelzustand und einem ersten Entkoppelzustand umschaltbar. In dem ersten Koppelzustand ist die dritte Welle mittels des ersten Schaltelements drehfest mit der dritten Abtriebswelle verbunden. In dem ersten Entkoppelzustand gibt das erste Schaltelement die dritte Welle und die dritte Abtriebswelle derart frei, dass in dem ersten Entkoppelzustand die dritte Welle relativ zu der dritten Abtriebswelle drehbar ist beziehungsweise umgekehrt. Dabei ist beispielsweise das erste Schaltelement, insbesondere relativ zu dem Gehäuse und/oder translatorisch, zwischen wenigstens einer ersten Koppelstellung und wenigstens einer ersten Entkoppelstellung bewegbar. Die erste Koppelstellung bewirkt den ersten Koppelzustand, und die erste Entkoppelstellung bewirkt den ersten Entkoppelzustand.

Um nun eine besonders bauraum- und kostengünstige Bauweise des Hybridantriebssystems realisieren zu können, ist es ferner auf bekannte Weise vorgesehen, dass die vierte Welle drehfest mit dem ersten Element des zweiten Planetensatzes verbunden beziehungsweise gekoppelt oder verbindbar beziehungsweise koppelbar ist. Hierdurch kann insbesondere in axialer Richtung des Getriebes und somit des Hybridantriebssystems eine besonders kompakte Bauweise realisiert werden. Im Rahmen der vorliegenden Offenbarung bezieht sich die Bezeichnung "axial" auf die Planetensatzdrehachse, so dass insbesondere entlang der Planetensatzdrehachse betrachtet eine besonders kompakte, das heißt kurze Bauweise des Hybridantriebssystems geschaffen werden kann. Wieder mit anderen Worten ausgedrückt kann eine besonders geringe, entlang der axialen Richtung des Getriebes verlaufende Länge des Hybridantriebssystems realisiert werden. Außerdem können Komponenten in axialer Richtung des Getriebes besonders nahe an der Verbrennungskraftmaschine angeordnet werden, so dass ein besonders geringer Bauraumbedarf des Hybridantriebssystems darstellbar ist. Des Weiteren können die Kosten des erfindungsgemäßen Hybridantriebssystems besonders gering gehalten werden. In der Folge kann das Getriebe insbesondere als Hybridmehrganggetriebe vorteilhaft in das Kraftfahrzeug integriert werden. Durch Verwendung der Schaltelemente kann das Getriebe Mehrganggetriebe ausgebildet werden. Dies bedeutet, dass mehrere, schaltbare und somit einlegbare und auslegbare Gänge des Getriebes geschaffen werden können, dessen Gänge sich beispielsweise in ihren jeweiligen Übersetzungen voneinander unterscheiden. Außerdem ist es möglich, zumindest einen der Gänge, mehrere der Gänge oder alle Gänge des Getriebes lastschaltfähig auszuführen.

Besonders vorteilhaft ist dabei die vierte Welle unter Umgehung des ersten Schaltelementes drehfest mit dem ersten Element des zweiten Planetensatzes verbunden oder verbindbar.

Im Rahmen der vorliegenden Offenbarung sind unter koaxial zueinander angeordneten, drehbaren Bauteilen solche Bauteile oder Bauelemente zu verstehen, die insbesondere relativ zu dem Gehäuse um eine jeweilige Bauelementdrehachse drehbar sind, wobei die Bauelementdrehachsen koaxial zueinander verlaufen beziehungsweise zusammenfallen.

Erfindungsgemäß ist vorgesehen, dass die erste Welle ein erstes Sonnenrad des ersten Planetensatzes umfasst, wobei die dritte Welle ein zweites Sonnenrad des ersten Planetensatzes umfasst. Hierdurch kann auf besonders bauraum-, gewichts- und kostengünstige Weise ein besonders effizienter Antrieb des Kraftfahrzeugs realisiert werden.

Um den Bauraumbedarf, das Gewicht und die Kosten des Hybridantriebssystems besonders gering halten zu können, ist es bei einer vorteilhaften Ausführungsform der Erfindung vorgesehen, dass der zweite Planetensatz genau drei Elemente in Form der zuvor genannten Elemente aufweist.

Eine weitere Ausführungsform zeichnet sich dadurch aus, dass der vierwellige, erste Planetensatz genau vier Wellen in Form der zuvor genannten Wellen aufweist. Hierdurch kann ein besonders bauraum-, gewichts- und kostengünstiger Aufbau des Hybridantriebssystems dargestellt werden. Bevorzugt weist der erste Planetensatz sechs Getriebeelemente des ersten Planetensatzes auf, nämlich bevorzugt 2 Sonnenräder, zwei Planetenträger und zwei Hohlräder. Diesen sechs Getriebeelementen des ersten Planetensatzes ordnet der Fachmann zunächst jeweils eine Welle, also insgesamt sechs Wellen des ersten Planetensatzes, zu. Bevorzugt sind zwei der sechs Elemente des ersten Planetensatzes drehfest miteinander verbunden. Und es sind bevorzugt weitere zwei der sechs Element des ersten Planetensatzes drehfest miteinander verbunden. Bevorzugt hat auf diese Weise der erste Planetensatz die vier relativ zueinander drehbar angeordneten Wellen.

Bei einer weiteren, besonders vorteilhaften Ausführungsform der Erfindung ist das zweite Element des zweiten Planetensatzes mittels des dritten Schaltelements mit dem Gehäuse drehfest verbindbar. Somit ist beispielsweise das dritte Schaltelement zwischen einem zweiten Koppelzustand und einem zweiten Entkoppelzustand umschaltbar. In dem zweiten Koppelzustand ist das zweite Element mittels des dritten Schaltelements drehfest mit dem Gehäuse verbunden, so dass Relativdrehungen zwischen dem Gehäuse und dem zweiten Element unterbleiben. In dem zweiten Entkoppelzustand gibt das dritte Schaltelement das zweite Element für eine um das Gehäuse erfolgende Drehung frei, so dass in dem zweiten Entkoppelzustand das zweite Element relativ zu dem Gehäuse drehbar ist, insbesondere um eine Elementdrehachse, welche eine Drehachse des zweiten Planetensatzes ist. Dabei ist es besonders bevorzugt vorgesehen, dass die Planungssätze koaxial zueinander angeordnet sind, so dass die Planetensatzdrehachse, um welche die Wellen, insbesondere relativ zu dem Gehäuse und/oder relativ zueinander, drehbar sind, mit der Elementdrehachse des zweiten Planetensatzes zusammenfällt. Dabei ist beispielsweise das dritte Schaltelement, insbesondere relativ zu dem Gehäuse und/oder translatorisch, zwischen wenigstens einer den zweiten Koppelzustand bewirkenden, zweiten Koppelstellung und/oder wenigstens einer den zweiten Entkoppelzustand bewirkenden, zweiten Entkoppelstellung bewegbar.

Dabei ist es ferner vorzugsweise vorgesehen, dass das erste Element, insbesondere permanent, drehfest mit der vierten Welle verbunden beziehungsweise gekoppelt ist. Außerdem ist es bei dieser Ausführungsform vorzugsweise vorgesehen, dass das dritte Element, insbesondere permanent, drehfest mit der dritten Abtriebswelle verbunden beziehungsweise gekoppelt ist. Dadurch kann ein besonders kompakter Aufbau des Hybridantriebssystems realisiert werden.

Um alternativ eine besonders kompakte Bauweise des Hybridantriebssystems insbesondere in axialer Richtung des Getriebes realisieren zu können, ist es bei einer weiteren Ausführungsform der Erfindung vorgesehen, dass das zweite Element, insbesondere permanent, drehfest mit dem Gehäuse verbunden ist. Dabei hat es sich als besonders vorteilhaft gezeigt, wenn das erste Element mittels des dritten Schaltelements drehfest mit der vierten Welle verbindbar ist. Bei dieser Ausführungsform ist es somit vorgesehen, dass in dem zweiten Koppelzustand das erste Element mittels des dritten Schaltelements drehfest mit der vierten Welle verbunden ist, wobei das dritte Schaltelement in dem zweiten Entkoppelzustand das erste Element und die vierte Welle derart freigibt, dass das erste Element und die vierte Welle, insbesondere um die Planetensatzdrehachse beziehungsweise um die Elementdrehachse, relativ zueinander drehbar sind. Außerdem zeichnen sich diese Ausführungsformen dadurch aus, dass das dritte Element, insbesondere permanent, drehfest mit der dritten Abtriebswelle verbunden ist.

Bei einer weiteren, alternativen und besonders vorteilhaften Ausführungsform der Erfindung ist es vorgesehen, dass das zweite Element, insbesondere permanent, drehfest mit dem Gehäuse verbunden ist. Dabei ist das erste Element, insbesondere permanent, drehfest mit der vierten Welle verbunden, und das dritte Element ist mittels des dritten Schaltelements drehfest mit der dritten Abtriebswelle verbindbar. Somit ist es bei dieser Ausführungsform vorzugsweise vorgesehen, dass in dem zweiten Koppelzustand das dritte Element mittels des dritten Schaltelements drehfest mit der dritten Abtriebswelle verbunden ist, wobei in dem zweiten Entkoppelzustand das dritte Schaltelement das dritte Element und die dritte Abtriebswelle derart freigibt, dass das dritte Element und die dritte Abtriebswelle, insbesondere um die Planetensatzdrehachse beziehungsweise um die Elementdrehachse, relativ zueinander drehbar sind. Dadurch kann insbesondere in axialer Richtung des Getriebes betrachtet eine besonders geringe Länge des Hybridantriebssystems dargestellt werden.

Um die Teileanzahl und somit die Kosten, das Gewicht und den Bauraumbedarf des Hybridantriebssystems besonders gering halten zu können, ist es in weiterer Ausgestaltung der Erfindung vorgesehen, dass insgesamt genau drei Schaltelemente in Form des ersten Schaltelements, des als das Verblockungsschaltelement ausgebildeten zweiten Schaltelements und des dritten Schaltelements vorgesehen sind. Mit anderen Worten umfasst das Hybridantriebssystem genau drei Schaltelemente in Form der zuvor genannten Schaltelemente, wobei das erste Schaltelement als das Verblockungsschaltelement ausgebildet ist. Außerdem können hierdurch beispielsweise besonders vorteilhaft die zuvor genannten und insbesondere lastschaltfähigen Gänge dargestellt werden, so dass das Getriebe besonders bauraum-, gewichts- und kostengünstig als Mehrganggetriebe abgeführt werden kann.

Eine weitere Ausführungsform zeichnet sich dadurch aus, dass die elektrische Maschine koaxial, axial überlappend sowie radial umgebend zu dem Getriebe angeordnet ist. Hierunter ist insbesondere Folgendes zu verstehen: Unter dem Merkmal, dass die elektrische Maschine koaxial zu dem Getriebe angeordnet ist, ist zu verstehen, dass die Maschinendrehachse, um welche der Rotor relativ zu dem Stator drehbar ist, mit der Planetensatzdrehachse des ersten Planetensatzes und somit vorzugsweise auch mit der Elementdrehachse des zweiten Planetensatzes zusammenfällt. Unter dem Merkmal, dass die elektrische Maschine axial überlappend zu dem Getriebe angeordnet ist, ist insbesondere zu verstehen, dass zumindest ein erster Längenbereich des Getriebes, insbesondere zumindest ein erster Längenbereich des ersten Planetensatzes und/oder des zweiten Planetensatzes, in radialer Richtung des Getriebes, das heißt entlang einer senkrecht zur Planetensatzdrehachse verlaufenden Richtung nach außen hin zumindest durch einen zweiten Längenbereich der elektrischen Maschine überlappt beziehungsweise überdeckt ist. Des Weiteren ist unter dem Merkmal, dass die elektrische Maschine radial umgebend zu dem Getriebe angeordnet ist, zu verstehen, dass zumindest der zweite Längenbereich der elektrischen Maschine, zumindest den ersten Längenbereich des Getriebes in um die Planetensatzdrehachse verlaufender Umfangsrichtung des Getriebes vollständig umlaufend umgibt, so dass der erste Längenbereich in dem zweiten Längenbereich angeordnet ist. Dadurch kann eine besonders kompakte Bauweise des Hybridantriebssystems dargestellt werden.

Bei einer weiteren, besonders vorteilhaften Ausführungsform der Erfindung ist es vorgesehen, dass die zweite Welle ein erstes Hohlrad des ersten Planetensatzes und ein, insbesondere permanent, drehfest mit dem ersten Hohlrad verbundenes, zweites Hohlrad des ersten Planetensatzes umfasst beziehungsweise ist. Dadurch können die Teileanzahl und somit die Kosten, Bauraumbedarf und das Gewicht des Hybridantriebssystems in einem besonders geringen Rahmen gehalten werden.

Bei einer weiteren, besonders vorteilhaften Ausführungsform der Erfindung ist es vorgesehen, dass die vierte Welle einen ersten Planetenträger des ersten Planetensatzes umfasst, dessen erster Planetenträger beispielsweise, insbesondere permanent, drehfest mit dem als zweiter Planetenträger bezeichneten, zweiten Planetenträger des zweiten Planetensatzes verbunden sein kann. Hierdurch lässt sich auf besonders bauraumgünstige Weise ein besonders vorteilhafter Antrieb des Kraftfahrzeugs darstellen.

Schließlich hat es sich als besonders vorteilhaft gezeigt, wenn die Verbrennungskraftmaschine, ein Abtriebsritzel, welches, insbesondere permanent, drehfest mit der dritten Abtriebswelle verbunden ist, der zweite Planetensatz und der vierwellige, erste Planetensatz in axialer Richtung des Getriebes und somit entlang der Planetensatzdrehachse betrachtet, in folgender Reihenfolge angeordnet sind: die Verbrennungskraftmaschine - das Abtriebsritzel - der zweite Planetensatz - der vierwellige, erste Planetensatz. Mit anderen Worten ist es vorzugsweise vorgesehen, dass in axialer Richtung des Getriebes und somit entlang der Planetensatzdrehachse betrachtet das Abtriebsritzel auf die Verbrennungskraftmaschine, der zweite Planetensatz auf das Abtriebsritzel und der vierwellige, erste Planetensatz auf den zweiten Planetensatz folgt. Dadurch kann die axiale Länge des Hybridantriebssystems in einem besonders geringen Rahmen gehalten werden.

Ein zweiter Aspekt der Erfindung betrifft ein vorzugsweise als Kraftwagen, insbesondere als Personenkraftwagen, ausgebildetes Kraftfahrzeug, welches ein Hybridantriebssystem gemäß dem ersten Aspekt der Erfindung aufweist und mittels des Hybridantriebssystems antreibbar ist. Somit ist das Kraftfahrzeug als Hybridfahrzeug ausgebildet. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Da die in axialer Richtung des Getriebes verlaufende Länge des Hybridantriebssystems besonders gering gehalten werden kann, kann das Hybridantriebssystem besonders vorteilhaft quer eingebaut, das heißt als Quereinbau verwendet werden. Hierunter ist zu verstehen, dass in vollständig hergestelltem Zustand des Kraftfahrzeugs die axiale Richtung des Getriebes und somit des Hybridantriebssystems insgesamt quer beziehungsweise senkrecht zur Fahrzeuglängsrichtung (y-Richtung) verläuft.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Antriebsstrangs für ein Kraftfahrzeug, mit einem erfindungsgemäßen Hybridantriebssystem;
- Fig. 2: eine schematische Darstellung des Hybridantriebssystems gemäß einer ersten Ausführungsform;
- Fig. 3: eine schematische Darstellung des Hybridantriebssystems gemäß einer zweiten Ausführungsform; und
- Fig. 4: eine Schalttabelle zur Erläuterung von unterschiedlichen Betriebszuständen des Hybridantriebssystems.

In den Figuren sind gleiche oder funktionsgleiche Elemente mit gleichen Bezugszeichen versehen.

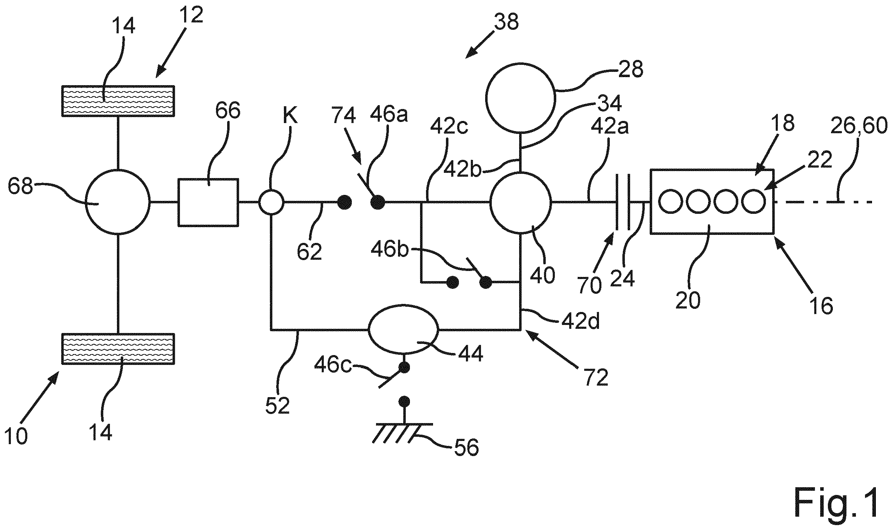

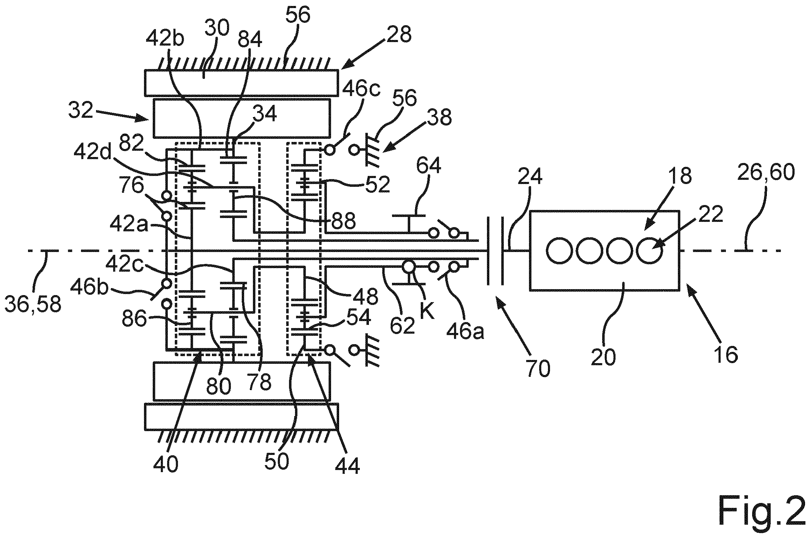

Fig. 1 zeigt in einer schematischen Darstellung einen Antriebsstrang 10 für ein vorzugsweise als Kraftwagen, insbesondere als Personenkraftwagen, ausgebildetes Kraftfahrzeug. In seinem vollständig hergestellten Zustand weist das Kraftfahrzeug wenigstens oder genau zwei in Fahrzeuglängsrichtung (x-Richtung) hintereinander angeordnete und auch als Fahrzeugachsen bezeichnete Achsen auf, wobei der Antriebsstrang 10 eine der Achsen umfasst. Die Achse des Antriebsstrangs 10 ist in Fig. 2 mit 12 bezeichnet. Die Achse 12 weist wenigstens oder genau zwei in Fahrzeugquerrichtung (y-Richtung) gegenüberliegende und auch als Fahrzeugräder bezeichnete Räder 14 auf, welche antreibbare oder angetriebene Räder sind. Durch Antreiben der Räder 14 wird das Kraftfahrzeug insgesamt angetrieben. Der Antriebsstrang 10 umfasst ein Hybridantriebssystem 16, mittels welchem die Räder 14 und somit das Kraftfahrzeug antreibbar sind. Das Hybridantriebssystem 16 weist eine auch als Brennkraftmaschine oder Verbrennungsmotor bezeichnete Verbrennungskraftmaschine 18 auf. Aus Fig. 1 ist erkennbar, dass die Verbrennungskraftmaschine 18 einen Motorblock 20 aufweist, welcher mehrere Zylinder 22 bildet beziehungsweise, insbesondere direkt, begrenzt. Der jeweilige Zylinder 22 begrenzt teilweise einen jeweiligen Brennraum, in welchem während eines befeuerten Betriebs der Verbrennungskraftmaschine 18 Verbrennungsvorgänge ablaufen. Die Verbrennungskraftmaschine 18 weist eine erste Abtriebswelle 24 auf, welche vorliegend als eine Kurbelwelle ausgebildet ist. Dabei ist die Verbrennungskraftmaschine 18 als ein Hubkolbenmotor ausgebildet. Die Kurbelwelle (erste Abtriebswelle 24) ist um eine Kurbelwellendrehachse 26 relativ zu dem Motorblock 20 drehbar. Über die Kurbelwelle kann die Verbrennungskraftmaschine 18 erste Antriebsmomente zum Antreiben des Kraftfahrzeugs bereitstellen.

Das Hybridantriebssystem 16 umfasst außerdem eine in Fig. 1 besonders schematisch dargestellte, elektrische Maschine 28. Wie aus Fig. 2 erkennbar ist, welche eine erste Ausführungsform des Hybridantriebssystems 16 zeigt, weist die elektrische Maschine 28 einen Stator 30 und einen Rotor 32 auf, welcher eine Rotorwelle 34 umfasst. Der Rotor 32 und somit die Rotorwelle 34 sind um eine Maschinendrehachse 36 relativ zu dem Stator 30 und auch relativ zu dem Motorblock 20 drehbar. Aus Fig. 2 ist erkennbar, dass die elektrische Maschine 28 koaxial zu der Verbrennungskraftmaschine 18 angeordnet ist, so dass die Maschinendrehachse 36 mit der Kurbelwellendrehachse 26 zusammenfällt. Der Rotor 32 beziehungsweise die Rotorwelle 34 ist eine zweite Abtriebswelle, über welche die elektrische Maschine 28, insbesondere in ihrem Motorbetrieb, zweite Antriebsmomente zum Antreiben des Kraftfahrzeugs beziehungsweise der Räder 14 bereitstellen kann.

Das Hybridantriebssystem 16 umfasst außerdem ein Getriebe 38. Das Getriebe 38 weist einen vierwelligen, ersten Planetensatz 40 auf, welcher wenigstens oder vorliegend genau vier Wellen 42a-d aufweist. Das Getriebe 38 umfasst außerdem einen zweiten Planetensatz 44 und, insbesondere genau, drei Schaltelemente 46a-c; nämlich ein erstes Schaltelement 46a, ein zweites Schaltelement 46b und ein drittes Schaltelement 46c. Das erste Schaltelement 46a wird auch mit SB bezeichnet, das zweite Schaltelement 46b wird auch mit SK bezeichnet, und das dritte Schaltelement 46c wird auch mit SA bezeichnet. Die Welle 42a wird auch als erste Welle 42a, die Welle 42b wird auch als zweite Welle 42b bezeichnet, die Welle 42c wird auch als dritte Welle 42c bezeichnet, und die Welle 42d wird auch als vierte Welle 42d bezeichnet. Der zweite Planetensatz 44 weist, insbesondere genau, drei Elemente auf. Bei der in Fig. 2 gezeigten, ersten Ausführungsform ist ein erstes der Elemente des zweiten Planetensatzes 44 ein drittes Sonnenrad 48 des zweiten Planetensatzes 44, ein zweites der Elemente des Planetensatzes 44 ist ein drittes Hohlrad 50 des zweiten Planetensatzes 44, und das dritte Element des zweiten Planetensatzes 44 ist ein zweiter Planetenträger 52 des zweiten Planetensatzes 44. Der zweite Planetenträger 52 wird auch als zweiter Steg bezeichnet. Dabei umfasst der zweite Planetensatz 44 zweite Planetenräder 54 des zweiten Planetensatzes 44, welche drehbar an dem zweiten Planetenträger 52 gelagert sind. Das jeweilige zweite Planetenrad 54 kämmt dabei einerseits direkt mit dem Sonnenrad 48 und andererseits direkt mit dem Hohlrad 50 des zweiten Planetensatzes 44. Die Wellen 42a-d sind relativ zueinander um relativ zueinander in Fig. 2 besonders schematisch dargestellte Gehäuse 56 des Getriebes 38 und somit des Hybridantriebssystems 16 drehbar und zwar um eine einfach auch als Drehachse bezeichnete Planetensatzdrehachse 58. Aus Fig. 2 ist erkennbar, dass der Planetensatz 40 koaxial zu der elektrischen Maschine 28 und koaxial zu der Verbrennungskraftmaschine 18 angeordnet ist, so dass die Planetensatzdrehachse 58 (Drehachse) mit der Maschinendrehachse 36 und mit der Kurbelwellendrehachse 26 zusammenfällt. Außerdem ist zumindest eines der Elemente des Planetensatzes 44 um eine Elementdrehachse 60 relativ zu dem Gehäuse 56 und/oder relativ zu wenigstens einem weiteren der Elemente des Planetensatzes 44 drehbar. Aus Fig. 2 ist erkennbar, dass die Planungssätze 40 und 44 koaxial zueinander angeordnet sind, so dass die Planetensatzdrehachse 58 mit der Elementdrehachse 60 zusammenfällt. Außerdem fällt die Elementdrehachse 60 mit der Maschinendrehachse 36 und mit der Kurbelwellendrehachse 26 zusammen. Des Weiteren sind die Wellen 42a-d mittels eines Verblockungselements drehfest miteinander verbindbar. Bei der in Fig. 2 gezeigten, ersten Ausführungsform ist das Verblockungsschaltelement durch das zweite Schaltelement 46b gebildet, so dass die Wellen 42a-d mittels des zweiten Schaltelements 46b drehfest miteinander verbindbar sind.

Das Getriebe 38 umfasst eine dritte Abtriebswelle 62, über welche Abtriebsdrehmomente aus dem Getriebe 38 ausleitbar sind. Das jeweilige Abtriebsmoment resultiert beispielsweise aus dem jeweiligen, ersten Antriebsmoment und/oder aus dem jeweiligen, zweiten Antriebsmoment. Dabei ist die dritte Welle 42c mittels des ersten Schaltelements 46a drehfest mit der dritten Abtriebswelle 62 verbindbar. Aus Fig. 2 ist erkennbar, dass das Getriebe 38 ein Zahnrad in Form eines Abtriebsritzels 64 aufweist, welches, insbesondere permanent, drehfest mit der Abtriebswelle 62 verbunden ist. Aus Fig. 1 ist erkennbar, dass das Hybridantriebssystem 16 eine auch als Final-Drive oder Final-Drive-Übersetzung bezeichnete Endübersetzung 66 aufweisen kann, welche einstufig oder mehrstufig sein kann. Die Endübersetzung 66 umfasst das Abtriebsritzel 64. Dabei umfasst die Achse 12 ein einfach auch als Differential bezeichnetes Differentialgetriebe 68, dessen Funktion insbesondere umfasst, bei einer Kurvenfahrt des Kraftfahrzeugs unterschiedliche Drehzahlen der Räder 14 zuzulassen, insbesondere derart, dass sich das kurvenäußere Rad mit einer größeren Drehzahl dreht oder drehen kann als das kurveninnere Rad, insbesondere während die Räder 14 über das Differentialgetriebe 68 von der Verbrennungskraftmaschine 18 und/oder der elektrischen Maschine 28 angetrieben werden. Die Endübersetzung 66 ist dabei bezogen auf einen Drehmomentenfluss, über welchen das jeweilige, von dem Getriebe 38 über die dritte Abtriebswelle 62 bereitgestellte Abtriebsmoment von der Abtriebswelle 62 auf das Differentialgetriebe 68 übertragbar ist beziehungsweise übertragen wird, in dem Drehmomentenfluss und dabei zwischen der Abtriebswelle 62 und dem Differentialgetriebe 68, das heißt stromab der Abtriebswelle 62 und stromauf des Differentialgetriebes 68 angeordnet, wobei die Endübersetzung 66 entlang des von der Abtriebswelle 62 hin zu dem Differentialgetriebe 68 fließenden Drehmomentenflusses die letzte Übersetzung vor dem Differentialgetriebe 68 ist.

Das Hybridantriebssystem 16 umfasst außerdem eine Trennkupplung 70, welche auch mit K0 bezeichnet wird. Die Trennkupplung 70 ist vorzugsweise eine Reibkupplung. Insbesondere kann die Trennkupplung 70 eine Lamellenkupplung sein. Mittels der Trennkupplung 70 kann die Kurbelwelle (Abtriebswelle 24) drehfest mit der ersten Welle 42a verbunden werden.

Um eine besonders bauraum- und kostengünstige Bauweise des Hybridantriebssystems 16 realisieren zu können, ist die vierte Welle 42d drehfest mit dem ersten Element des zweiten Planetensatzes 44 verbunden oder verbindbar. Somit ist es bei der in Fig. 2 gezeigten ersten Ausführungsform vorgesehen, dass die vierte Welle 42d, insbesondere permanent, drehfest mit dem Sonnenrad 48 des Planetensatzes 44 verbunden ist.

Aus Fig. 1 und 2 erkennbar, dass das Hybridantriebssystem 16 ein Fahrzeugantrieb ist, welcher zumindest die Verbrennungskraftmaschine 18, die elektrische Maschine 28 und den zumindest oder genau vierwelligen Planetensatz 40 aufweist. Außerdem weist das Hybridantriebssystem 16 eine mechanische, erste Strecke 72 und eine mechanische, zweite Strecke 74 auf. Des Weiteren umfasst das Hybridantriebssystem 16 einen Knoten K, an oder in dem die Strecken 72 und 74, insbesondere drehfest, verbunden oder verbindbar sind. Der Knoten K ist dabei mit der antreibbaren oder angetriebenen Achse 12 und somit mit den Rädern 14 verbunden oder verbindbar. Bei der ersten Ausführungsform ist die Welle 42a mit der Kurbelwelle drehfest gekoppelt oder koppelbar, insbesondere mittels der Trennkupplung 70. Beispielsweise die Welle 42d ist Teil der mechanischen Strecke 72, die somit die Welle 42d und insbesondere als weitere Welle den zweiten Planetenträger 52 umfasst. Außerdem umfasst die mechanische Strecke 72 ein Teilgetriebe, welches vorliegend als der zweite Planetensatz 44 ausgebildet ist. Das Teilgetriebe ist dabei direkt oder indirekt mit der Welle 42d und der weiteren Welle (Planetenträger 52) verbunden. Beispielsweise die Welle 42c ist Bestandteil der mechanischen Strecke 74, welche somit die Welle 42c und das Schaltelement 46a sowie als weitere Welle die Abtriebswelle 62 umfasst. Vorliegend umfasst beispielsweise der Knoten K das Abtriebsritzel 64, so dass vorliegend die Welle 42c mittels des Schaltelements 46a drehfest mit der Abtriebswelle 62 und somit mit dem Knoten K (Abtriebsritzel 64) verbindbar ist. Die Rotorwelle 34 muss keine separate Welle sein, so dass es denkbar ist, dass der Rotor 32 direkt mit der Welle 42b verbindbar oder verbunden sein kann beziehungsweise mit anderen Worten kann die Rotorwelle 34 die Welle 42b sein beziehungsweise umgekehrt. Wieder mit anderen Worten ausgedrückt kann die Rotorwelle 34 einstückig mit der Welle 42b ausgebildet sein beziehungsweise umgekehrt.

Vorzugsweise weist das Teilgetriebe, das heißt der Planetensatz 44, eine Übersetzung von ungleich 1:1 beziehungsweise eine Übersetzungsstufe auf, deren Übersetzung ungleich 1:1 ist. Außerdem umfasst die mechanische Strecke 72 das auch mit SA bezeichnete, dritte Schaltelement 46c, mittels welchem beispielsweise bei der zweiten Ausführungsform das Hohlrad 50 des Planetensatzes 44 drehfest mit dem Gehäuse 56 verbindbar ist. Ist somit das Schaltelement SA (drittes Schaltelement 46c) geschlossen, besteht zwischen einer der Wellen 42a-d des vierwelligen, ersten Planetensatzes 40 und dem Knoten K, insbesondere über die mechanische Strecke 72, eine mechanische Verbindung. Das Schaltelement SA kann dabei innerhalb oder außerhalb des Teilgetriebes angeordnet sein.

Es ist erkennbar, dass bei der ersten Ausführungsform der zweite Planetensatz 44 genau drei Elemente in Form des Sonnenrads 48, des Hohlrads 50 und des Planetenträgers 52 aufweist. Ferner ist es vorgesehen, dass der vierwellige, erste Planetensatz 40 genau vier Wellen 42-d aufweist. Bei der in Fig. 2 gezeigten ersten Ausführungsform ist das Hohlrad 50, welches ein beziehungsweise das zweite Element des Planetensatzes 44 ist, mittels des dritten Schaltelements 46c drehfest mit dem Gehäuse 56 verbindbar, und das Sonnenrad 48, welches das oder ein erstes Element des Planetensatzes 44 ist, ist, insbesondere permanent, drehfest mit der vierten Welle 42d verbunden, und der Planetenträger 52, welcher ein beziehungsweise das dritte Element des Planetensatzes 44 ist, ist, insbesondere permanent, drehfest mit der Abtriebswelle 62 (dritte Abtriebswelle) verbunden.

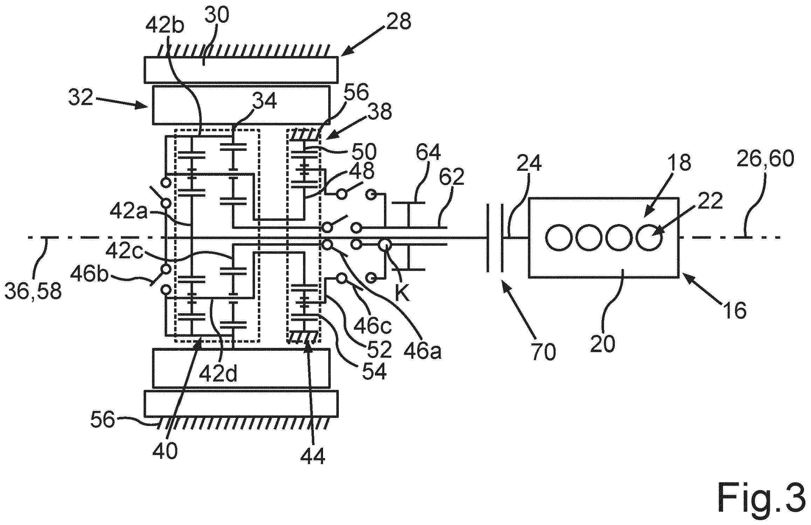

Fig. 3 zeigt eine zweite Ausführungsform des Hybridantriebssystems 16. Bei der zweiten Ausführungsform ist das Hohlrad 50 (zweites Element), insbesondere permanent, drehfest mit dem Gehäuse 56 verbunden, und das Sonnenrad 48 (erstes Element) ist, insbesondere permanent, drehfest mit der vierten Welle 42d verbunden, und der Planetenträger 52 (drittes Element) ist mittels des dritten Schaltelements 46c drehfest mit der dritten Abtriebswelle 62 und somit mit dem Abtriebsritzel 64 und dem Knoten K verbindbar.

Bei einer in den Figuren nicht gezeigten, dritten Ausführungsform ist das zweite Element (Hohlrad 50), insbesondere permanent, drehfest mit dem Gehäuse 56 verbunden, und das erste Element (Sonnenrad 48) ist mittels des dritten Schaltelements 46c drehfest mit der vierten Welle 42d verbindbar, und das dritte Element (Planetenträger 52) ist, insbesondere permanent, drehfest mit der dritten Abtriebswelle 62 verbunden.

Bei einer weiteren Ausführungsform ist es denkbar, dass das zweite Element (Hohlrad 50) mittels des Schaltelements 46c drehfest mit dem Gehäuse 56 verbindbar ist, und das erste Element (Hohlrad 48), insbesondere permanent, drehfest mit der vierten Welle 42d verbunden ist, und mittels des zweiten Schaltelements 46b das dritte Element (Planetenträger 52) drehfest mit der dritten Welle 42c verbindbar ist.

Grundsätzlich ist es denkbar, dass das Abtriebsritzel 64 direkt mit dem Differentialgetriebe 68, das heißt mit einem beispielsweise als Tellerrad ausgebildeten Eingangsrad des Differentialgetriebes 66 kämmt, oder es kann ein Zwischenzahnrad vorgesehen sein, derart, dass das Abtriebsritzel 64 direkt mit dem Zwischenzahnrad kämmt, ohne direkt mit dem Eingangszahnrad zu kämmen, welches direkt mit dem Zwischenzahnrad kämmt.

Vorzugsweise ist der vierwellige, erste Planetensatz 40 derart ausgeführt, dass die erste Welle 42a in Bezug auf die vierte Welle 42d und die dritte Abtriebswelle 62 eine beziehungsweise die Summenwelle darstellt, insbesondere sobald eine Gangstufe in dem Teilgetriebe aktiv geschaltet ist und das Schaltelement SB (erstes Schaltelement 46a) geschlossen ist sowie die elektrische Maschine 28 kein signifikantes Drehmoment stellt, und dass die vierte Welle 42d in Bezug auf die Rotorwelle 34 und die erste Welle 42a die beziehungsweise eine Summenwelle darstellt, sobald eine Gangstufe im Teilgetriebe aktiv geschaltet ist und das Schaltelement SB offen ist, sowie die elektrische Maschine 28 ein signifikantes Drehmoment bereitstellt. Bei dem in den Figuren gezeigten Ausführungsbeispiel ist das Teilgetriebe in Planetenbauweise ausgeführt und somit als der zweite Planetensatz 44 ausgebildet. Dabei ist der Planetensatz 44 vorzugsweise als, insbesondere genau, dreiwelliger Planetensatz ausgeführt. In mindestens einem Schaltzustand des Schaltelements SA (drittes Schaltelements 46c) besteht, insbesondere über das Teilgetriebe, zwischen dem vierwelligen, ersten Planetensatz 40 und dem Knoten K eine mechanische Verbindung, vorzugsweise mit einer Übersetzung, welche ungleich 1 ist, das heißt welche ungleich 1 : 1 ist. Alternativ oder zusätzlich kann vorzugsweise vorgesehen sein, dass die mechanische Strecke 74 zwischen dem Planetensatz 40 und dem Knoten K keine separate Übersetzungsstufe wie je ein Zahnradpaar, ein Planetensatz oder dergleichen enthält, so dass vorzugsweise die mechanische Strecke 74 zwischen dem vierwelligen, ersten Planetensatz 40 und dem Knoten K direkt beziehungsweise mit einer Übersetzung von 1 (1 : 1) übersetzt ist.

Der vierwellige, erste Planetensatz 40 kann vorzugsweise über ein Verblockungsschaltelement, welches auch mit SK bezeichnet wird, verblockt werden. Bei den in den Figuren gezeigten Ausführungsbeispielen wird als das Verblockungsschaltelement SK das zweite Schaltelement 46b verwendet. Durch Verblocken des vierwelligen, ersten Planetensatzes 40 laufen dessen vier Wellen 42a-d als Block und somit mit einer identischen Drehzahl um, insbesondere um die Planetensatzdrehachse 58 und relativ zu dem Gehäuse 56. Dabei ist es vorzugsweise vorgesehen, dass das Schaltelement SK (Verblockungsschaltelement beziehungsweise zweites Schaltelement 46b) in seinem geschlossenen beziehungsweise geschalteten Zustand mindestens zwei beliebige der Wellen 42a-d des vierwelligen, ersten Planetensatzes 40 drehfest miteinander koppelt beziehungsweise verbindet.

Das Schaltelement SK (zweites Schaltelement 46b) kann reibschlüssig ausgeführt sein. Das Schaltelement SK kann formschlüssig ausgeführt sein. Das Schaltelement SK kann formschlüssig und nicht synchronisiert ausgeführt sein.

Das Schaltelement SB (erstes Schaltelement 46a) kann, insbesondere innerhalb der mechanischen Strecke 74, formschlüssig ausgeführt sein. Das Schaltelement SB, insbesondere innerhalb der mechanischen Strecke 74, kann formschlüssig und nicht synchronisiert ausgeführt sein. Das Schaltelement SB, insbesondere innerhalb der mechanischen Strecke 74, kann reibschlüssig sein.

Der Verbrennungsmotor (Verbrennungskraftmaschine 18) beziehungsweise dessen Kurbelwelle kann mittels der Trennkupplung 70 von dem restlichen, auch als Triebstrang bezeichneten Antriebsstrang 10 entkoppelt werden. Die auch mit K0 bezeichnete Trennkupplung kann reibschlüssig sein. Die Trennkupplung K0 kann formschlüssig sein. Die Trennkupplung K0 kann formschlüssig und nicht synchronisiert sein.

Das Teilgetriebe und der vierwellige, erste Planetensatz 40 können über eine Welle, wie vorliegend beispielsweise die vierte Welle 42d, miteinander, insbesondere drehfest, verbunden sein. Alternativ oder zusätzlich kann das Teilgetriebe schaltbar sein.

Das Schaltelement SA (drittes Schaltelement 46c), insbesondere innerhalb der mechanischen Strecke 72, kann formschlüssig sein. Das Schaltelement SA, insbesondere innerhalb der mechanischen Strecke 72, kann formschlüssig und nicht synchronisiert sein. Das Schaltelement SA, insbesondere innerhalb der mechanischen Strecke 72, kann reibschlüssig sein. Das Schaltelement SA verbindet in seinem geschalteten beziehungsweise geschlossenen Zustand eine der Wellen 42a-d des Planetensatzes 44 drehfest mit dem Gehäuse 56.

Die elektrische Maschine 28 und der vierwellige, erste Planetensatz 40 sind vorzugsweise koaxial zueinander angeordnet. Außerdem ist es bei den in den Figuren gezeigten Ausführungsbeispielen vorgesehen, dass die elektrische Maschine 28 koaxial, axial überlappend sowie radial umgebend zu dem Getriebe 38 angeordnet ist, insbesondere derart, dass die elektrische Maschine 28 koaxial, axial überlappend sowie radial umgebend zu dem vierwelligen, ersten Planetensatz 40 und/oder zu dem zweiten Planetensatz 44 angeordnet ist. Alternativ oder zusätzlich ist es vorgesehen, dass die elektrische Maschine 28 und der zweite Planetensatz 40 koaxial zueinander angeordnet sind. Daher ist es vorzugsweise vorgesehen, dass das Teilgetriebe, das heißt der zweite Planetensatz 44 in axialer Richtung des Getriebes 38 und somit entlang der Planetensatzdrehachse 58 betrachtet zwischen dem vierwelligen, ersten Planetensatz 40 und der Verbrennungskraftmaschine 18 angeordnet ist. Alternativ oder zusätzlich kann vorgesehen sein, dass das Teilgetriebe, das heißt der zweite Planetensatz 44 in axialer Richtung des Getriebes 38 zwischen dem vierwelligen, ersten Planetensatz 40 und der Verbrennungskraftmaschine 18 angeordnet ist. Alternativ oder zusätzlich ist es vorzugsweise vorgesehen, dass das auch als Endübersetzungsritzel oder Final-Drive-Ritzel bezeichnete Abtriebsritzel 64 in axialer Richtung des Getriebes 38 zwischen dem Teilgetriebe beziehungsweise dem zweiten Planetensatz 44 und der Verbrennungskraftmaschine 18 angeordnet ist.

Das Schaltelement SB kann in axialer Richtung des Getriebes 38 zumindest im Wesentlichen zwischen dem vierwelligen, ersten Planetensatz 40 und dem Teilgetriebe beziehungsweise dem zweiten Planetensatz 44 angeordnet sein. Ferner ist es denkbar, dass das Schaltelement SB in axialer Richtung des Getriebes 38 zwischen dem Abtriebsritzel 64 und der Verbrennungskraftmaschine 18 angeordnet ist. Ferner ist es denkbar, dass das Schaltelement SB von einer Hohlwelle umschlossen ist. Dies ist bei der in Fig. 3 gezeigten, zweiten Ausführungsform vorgesehen. Bei der genannten Hohlwelle handelt es sich insbesondere um den Planetenträger 52, so dass vorzugsweise das Schaltelement SB (erstes Schaltelement 46a) in der Hohlwelle angeordnet ist.

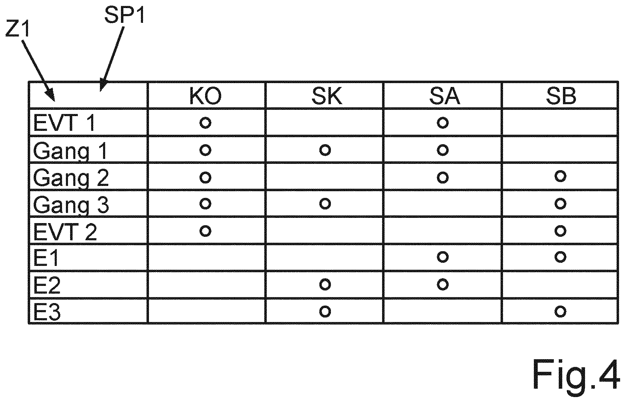

Schließlich zeigt Fig. 4 eine Schalttabelle mit unterschiedlichen Zuständen EVT 1, Gang 1, Gang 2, Gang 3, EVT 2, E1, E2 und E3 des Hybridantriebssystems 16. Die genannten Zustände sind in einer Spalte SP1 der Schalttabelle eingetragen. In einer Zeile Z1 der Schalttabelle sind die Trennkupplung K0 und die Schaltelemente SK, SA und SB eingetragen. In der in Fig. 4 gezeigten Schalttabelle bedeutet ein ausgefüllter Punkt, dass die Trennkupplung K0 beziehungsweise das jeweilige Schaltelement SK, SA und SB, unter der beziehungsweise dem der ausgefüllte Punkt eingetragen ist, geschlossen beziehungsweise geschaltet ist. Ist unter der Trennkupplung K0 beziehungsweise unter dem Schaltelement SK, SB beziehungsweise SA kein ausgefüllter Punkt eingetragen, so ist die Trennkupplung K0 beziehungsweise das jeweilige Schaltelement SK, SB beziehungsweise SA geöffnet. Der Zustand EVT 1 ist somit aktiviert, wenn die Trennkupplung K0 und gleichzeitig das Schaltelement SA geschlossen sind, während die Schaltelemente SK und SB geöffnet sind. Der Zustand Gang 1 ist aktiviert, wenn die Trennkupplung K0 und gleichzeitig die Schaltelemente SK und SA geschlossen sind, während das Schaltelement SB geöffnet ist. Demzufolge ist der Zustand Gang 2 aktiviert, wenn die Trennkupplung K0 und gleichzeitig die Schaltelemente SA und SB geschlossen sind, während das Schaltelement SK geöffnet ist. Der Zustand Gang 3 ist aktiviert, wenn die Trennkupplung K0 und gleichzeitig die Schaltelemente SK und SB geschlossen ist, während das Schaltelement SA geöffnet ist. Der Zustand EVT 2 ist aktiviert, wenn die Trennkupplung K0 und gleichzeitig das Schaltelement SB geschlossen sind, während die Schaltelemente SK und SA geöffnet sind. Der Zustand E1 ist aktiviert, wenn die Schaltelemente SA und SB gleichzeitig geschlossen sind, während die Trennkupplung K0 und das Schaltelement SK geöffnet sind. Der Zustand E2 ist aktiviert, wenn die Schaltelemente SK und SA gleichzeitig geschlossen sind, während die Trennkupplung K0 und das Schaltelement SB geöffnet sind. Der Zustand E3 ist aktiviert, wenn die Schaltelemente SK und SB gleichzeitig geschlossen sind, während die Trennkupplung K0 und das Schaltelement SA geöffnet sind.

Mit anderen Worten, das auch als Antriebseinheit bezeichnete Hybridantriebssystem 16 kann in dem Zustand EVT 1 als erstem EVT-Modus betrieben werden. Hier werden die Drehzahlen und Drehmomente der Verbrennungskraftmaschine 18 und der elektrischen Maschine 28 an dem vierwelligen, ersten Planetensatz 40 überlagert. Der erste EVT-Modus dient unter anderem dem Anfahren des Kraftfahrzeugs in einem hybridischen Modus, in welchem sowohl die Verbrennungskraftmaschine 18 als auch die elektrische Maschine 28 beteiligt sind. Der erste EVT-Modus kann unter anderem einer aktiven Übersetzungsverstellung sowie einer Drehzahlsynchronisierung, insbesondere innerhalb des Schaltelements SB, bei einem Wechsel von Gang 1 nach Gang 2 dienen. Die elektrische Maschine 28 kann in dem ersten EVT-Modus generatorisch betrieben werden. Die elektrische Maschine 28 kann in dem ersten EVT-Modus motorisch betrieben werden. Die elektrische Maschine 28 kann in dem ersten EVT-Modus generatorisch und motorisch betrieben werden.

Die Antriebseinheit kann in einem zweiten EVT-Modus betrieben werden, welcher der Zustand EVT 2 ist. Hier werden die Drehzahlen und Drehmomente der Verbrennungskraftmaschine 18 und der elektrischen Maschine 28 an dem Planetensatz 40 überlagert. Der zweite EVT-Modus dient unter anderem als Overdrive-Modus mit einer langen Übersetzung. Der zweite EVT-Modus kann unter anderem einer aktiven Übersetzungsverstellung sowie einer Drehzahlsynchronisierung, insbesondere innerhalb des Schaltelements SK, dienen, insbesondere bei einem Wechsel von Gang 2 nach Gang 3. Der zweite EVT-Modus kann unter anderem einer aktiven Übersetzungsverstellung sowie einer Drehzahlsynchronisierung, insbesondere innerhalb des Schaltelements SA, dienen, insbesondere bei einem Wechsel von Gang 3 nach Gang 2. Die elektrische Maschine 28 kann in dem zweiten EVT-Modus generatorisch betrieben werden. Die elektrische Maschine 28 kann in dem zweiten EVT-Modus motorisch betrieben werden. Die elektrische Maschine 28 kann in dem zweiten EVT-Modus generatorisch und motorisch betrieben werden.

Aus Fig. 2 und 3 ist erkennbar, dass die erste Welle 42a ein erstes Sonnenrad 76 des Planetensatzes 40 umfasst. Die dritte Welle 42c umfasst ein zweites Sonnenrad 78 des Planetensatzes 40. Die vierte Welle 42d umfasst einen ersten Planetenträger 80 des Planetensatzes 40, dessen erster Planetenträger 80, insbesondere permanent, drehfest mit dem Hohlrad 48 verbunden sein kann. Die zweite Welle 42b umfasst ein erstes Hohlrad 82 und ein zweites Hohlrad 84 des Planetensatzes 40, wobei die Hohlräder 82 und 84, insbesondere permanent, drehfest miteinander verbunden sind. Die Hohlräder 82 und 84 unterscheiden sich in ihren Zähnezahlen. Mit anderen Worten weist das Hohlrad 82 eine erste Zähnezahl und das Hohlrad 84 eine von der ersten Zähnezahl unterschiedliche, zweite Zähnezahl auf. Dabei sind dem Hohlrad 82 erste Planetenräder 86 des Planetensatzes 40 zugeordnet, und dem Hohlrad 84 sind zweite Planetenräder 88 des Planetensatzes 44 zugeordnet. Das jeweilige Planetenrad 86 kämmt einerseits direkt mit dem Hohlrad 82 und andererseits direkt mit dem Sonnenrad 76, und das jeweilige Planetenrad 88 kämmt einerseits direkt mit dem Sonnenrad 78 und andererseits direkt mit dem Hohlrad 84. Dabei sind sowohl die Planetenräder 86 als auch die Planetenräder 88 drehbar an dem den Planetenrädern 86 und 88 gemeinsamen Planetenträger 80 (Welle 42d) des Planetensatzes 40 gelagert. Der Planetenträger 80 wird auch als erster Steg bezeichnet.

### Bezugszeichenliste

- 10: Antriebsstrang
- 12: Achse
- 14: Rad
- 16: Hybridantriebssystem
- 18: Verbrennungskraftmaschine
- 20: Motorblock
- 22: Zylinder
- 24: erste Abtriebswelle
- 26: Kurbelwellendrehachse
- 28: elektrische Maschine
- 30: Stator
- 32: Rotor
- 34: Rotorwelle
- 36: Maschinendrehachse
- 38: Getriebe
- 40: vierwelliger erster Planetensatz
- 42a-d: Welle
- 44: zweiter Planetensatz
- 46a-c: Schaltelement
- 48: Sonnenrad
- 50: Hohlrad
- 52: Planetenträger
- 54: Planetenrad
- 56: Gehäuse
- 58: Planetensatzdrehachse
- 60: Elementdrehachse
- 62: dritte Abtriebswelle
- 64: Abtriebsritzel
- 66: Endübersetzung
- 68: Differentialgetriebe
- 70: Trennkupplung
- 72: mechanische Strecke
- 74: mechanische Strecke
- 76: Sonnenrad
- 78: Sonnenrad
- 80: Planetenträger
- 82: Hohlrad
- 84: Hohlrad
- 86: Planetenrad
- 88: Planetenrad
- K: Knoten

## Patentansprüche

1. Hybridantriebssystem (16) für ein Kraftfahrzeug, mit:
- einer Verbrennungskraftmaschine (18), welche eine erste Abtriebswelle (24) aufweist,
- einer elektrischen Maschine (28), welche einen Rotor (32) mit einer Rotorwelle (34) als zweiter Abtriebswelle aufweist, und
- einem Getriebe (38), welches einen vierwelligen, ersten Planetensatz (40), einen zweiten Planetensatz (44), ein erstes Schaltelement (46a), ein zweites Schaltelement (46b), ein drittes Schaltelement (46c) und eine dritte Abtriebswelle (62) aufweist, wobei:
oder vierwellige, erste Planetensatz (40) eine erste Welle (42a), eine zweite Welle (42b), eine dritte Welle (42c) und eine vierte Welle (42d) aufweist,
∘ der zweite Planetensatz (44) ein erstes Element (48), ein zweites Element (50) und ein drittes Element (52) aufweist,
∘ die erste Welle (42a), die zweite Welle (42b), die dritte Welle (42c) und die vierte Welle (42d) relativ zueinander drehbar und mittels des zweiten Schaltelementes (46b) drehfest miteinander verbindbar sind,
∘ die erste Abtriebswelle (24) drehfest mit der ersten Welle (42a) gekoppelt oder koppelbar ist,
∘ die Rotorwelle (34) derart mit der zweiten Welle (42b) gekoppelt oder koppelbar ist, dass von der Rotorwelle (34) ausgehende Drehmomente über die zweite Welle (42b) in das Getriebe (38) einleitbar sind, und
∘ die dritte Welle (42c) mittels des ersten Schaltelementes (46a) drehfest mit der dritten Abtriebswelle (62) verbindbar ist,
wobei die vierte Welle (42d) drehfest mit dem ersten Element (48) des zweiten Planentensatzes (44) verbunden oder verbindbar ist,
**dadurch gekennzeichnet, dass**
die erste Welle (42a) ein erstes Sonnenrad (76) des ersten Planetensatzes (40) umfasst und die dritte Welle (42c) ein zweites Sonnenrad (78) des ersten Planetensatzes (40) umfasst.

2. Hybridantriebssystem (16) nach Anspruch 1,
**dadurch gekennzeichnet, dass**
der zweite Planetensatz (44) genau drei Elemente (48, 50, 52), nämlich das erste Element (48), das zweite Element (50) und das dritte Element (52), aufweist.

3. Hybridantriebssystem (16) nach Anspruch 1 oder 2,
**dadurch gekennzeichnet, dass**
der vierwellige, erste Planetensatz (40) genau vier Wellen (42a-d) aufweist.

4. Hybridantriebssystem (16) nach einem der vorhergehenden Ansprüche,
**dadurch gekennzeichnet, dass**:
- das zweite Element (50) mittels des dritten Schaltelements (46c) mit einem Gehäuse (56) des Hybridantriebssystems (16) drehfest verbindbar ist,
- das erste Element (48) drehfest mit der vierten Welle (42d) verbunden ist, und
- das dritte Element (52) drehfest mit der dritten Abtriebswelle (62) verbunden ist.

5. Hybridantriebssystem (16) nach einem der Ansprüche 1 bis 3,
**dadurch gekennzeichnet, dass**:
- das zweite Element (50) drehfest mit einem Gehäuse (56) des Hybridantriebssystems (16) verbunden ist,
- das erste Element (48) mittels des dritten Schaltelementes (46c) drehfest mit der vierten Welle (42d) verbindbar ist, und
- das dritte Element (52) drehfest mit dritten Abtriebswelle (62) verbunden ist.

6. Hybridantriebssystem (16) nach einem der Ansprüche 1 bis 3,
**dadurch gekennzeichnet, dass**:
- das zweite Element (50) drehfest mit einem Gehäuse (56) des Hybridantriebssystems (16) verbunden ist,
- das erste Element (48) drehfest mit der vierten Welle (42d) verbunden ist, und
- das dritte Element (52) mittels des dritten Schaltelements (46c) drehfest mit der dritten Abtriebswelle (62) verbindbar ist.

7. Hybridantriebssystem (16) nach einem der Ansprüche 4 bis 6,
**dadurch gekennzeichnet, dass**
insgesamt genau drei Schaltelemente (46a-c) in Form des ersten Schaltelements (46a), des als das Verblockungsschaltelement (46b) ausgebildeten, zweiten Schaltelements (46b) und des dritten Schaltelements (46c) vorgesehen sind.

8. Hybridantriebssystem (16) nach einem der vorhergehenden Ansprüche,
**dadurch gekennzeichnet, dass**
die elektrische Maschine (28) koaxial, axial überlappend sowie radial umgebend zum Getriebe (38) angeordnet ist.

9. Hybridantriebssystem (16) nach einem der vorhergehenden Ansprüche,
**dadurch gekennzeichnet, dass**
die zweite Welle (42b) ein erstes Hohlrad (82) des ersten Planetensatz (40) und ein drehfest mit dem ersten Hohlrad (82) verbundenes, zweites Hohlrad (84) des ersten Planetensatz (40) umfasst.

10. Hybridantriebssystem (16) nach einem der vorhergehenden Ansprüche,
**dadurch gekennzeichnet, dass**
die vierte Welle (42d) einen ersten Planetenträger (80) des ersten Planetensatzes (40) umfasst.

11. Hybridantriebssystem (16) nach einem der vorhergehenden Ansprüche,
**dadurch gekennzeichnet, dass**
die Verbrennungskraftmaschine (18), ein Abtriebsritzel (64), welches drehfest mit der dritten Abtriebswelle (62) verbunden ist, der zweite Planetensatz (44) und der vierwellige, erste Planetensatz (40) in axialer Richtung des Getriebes (38) in folgender Reihenfolge angeordnet sind: die Verbrennungskraftmaschine (18) - das Abtriebsritzel (64) - der zweite Planetensatz (44) - der vierwellige, erste Planetensatz (40).

12. Kraftfahrzeug, mit einem Hybridantriebssystem (16) nach einem der vorhergehenden Ansprüche.

## Claims

1. Hybrid drive system (16) for a motor vehicle, comprising:
- an internal combustion engine (18), which has a first output shaft (24),
- an electric machine (28), which has a rotor (32) having a rotor shaft (34) as a second output shaft, and
- a transmission (38), which has a four-shaft first planetary gear set (40), a second planetary gear set (44), a first shifting element (46a), a second shifting element (46b), a third shifting element (46c) and a third output shaft (62), wherein:
∘ the four-shaft first planetary gear set (40) has a first shaft (42a), a second shaft (42b), a third shaft (42c) and a fourth shaft (42d),
∘ the second planetary gear set (44) has a first element (48), a second element (50) and a third element (52),
∘ the first shaft (42a), the second shaft (42b), the third shaft (42c) and the fourth shaft (42d) are rotatable relative to one another and can be connected to one another in a rotationally fixed manner by means of the second shifting element (46b),
∘ the first output shaft (24) is coupled or can be coupled to the first shaft (42a) in a rotationally fixed manner,
∘ the rotor shaft (34) is coupled or can be coupled to the second shaft (42b) in such a way that torques from the rotor shaft (34) can be introduced into the transmission (38) via the second shaft (42b), and
∘ the third shaft (42c) can be connected to the third output shaft (62) in a rotationally fixed manner by means of the first shifting element (46a),
wherein the fourth shaft (42d) is connected or can be connected to the first element (48) of the second planetary gear set (44) in a rotationally fixed manner,
**characterized in that**
the first shaft (42a) comprises a first sun gear (76) of the first planetary gear set (40) and the third shaft (42c) comprises a second sun gear (78) of the first planetary gear set (40).

2. Hybrid drive system (16) according to claim 1,
**characterized in that**
the second planetary gear set (44) has exactly three elements (48, 50, 52), namely the first element (48), the second element (50) and the third element (52).

3. Hybrid drive system (16) according to either claim 1 or 2,
**characterized in that**
the four-shaft first planetary gear set (40) has exactly four shafts (42a-d).

4. Hybrid drive system (16) according to any of the preceding claims, **characterized in that:**
- the second element (50) can be connected to a housing (56) of the hybrid drive system (16) in a rotationally fixed manner by means of the third shifting element (46c),
- the first element (48) is connected to the fourth shaft (42d) in a rotationally fixed manner, and
- the third element (52) is connected to the third output shaft (62) in a rotationally fixed manner.

5. Hybrid drive system (16) according to any of claims 1 to 3,
**characterized in that:**
- the second element (50) is connected to a housing (56) of the hybrid drive system (16) in a rotationally fixed manner,
- the first element (48) can be connected to the fourth shaft (42d) in a rotationally fixed manner by means of the third shifting element (46c), and
- the third element (52) is connected to the third output shaft (62) in a rotationally fixed manner.

6. Hybrid drive system (16) according to any of claims 1 to 3,
**characterized in that:**
- the second element (50) is connected to a housing (56) of the hybrid drive system (16) in a rotationally fixed manner,
- the first element (48) is connected to the fourth shaft (42d) in a rotationally fixed manner, and
- the third element (52) can be connected to the third output shaft (62) in a rotationally fixed manner by means of the third shifting element (46c).

7. Hybrid drive system (16) according to any of claims 4 to 6,
**characterized in that**
a total of exactly three shifting elements (46a-c) are provided in the form of the first shifting element (46a), the second shifting element (46b) designed as the blocking shifting element (46b), and the third shifting element (46c).

8. Hybrid drive system (16) according to any of the preceding claims,
**characterized in that**
the electric machine (28) is arranged coaxially with, axially overlapping and radially surrounding the transmission (38).

9. Hybrid drive system (16) according to any of the preceding claims,
**characterized in that**
the second shaft (42b) comprises a first ring gear (82) of the first planetary gear set (40) and a second ring gear (84) of the first planetary gear set (40), which second ring gear is connected to the first ring gear (82) in a rotationally fixed manner.

10. Hybrid drive system (16) according to any of the preceding claims,
**characterized in that**
the fourth shaft (42d) comprises a first planetary carrier (80) of the first planetary gear set (40).

11. Hybrid drive system (16) according to any of the preceding claims,
**characterized in that**
the internal combustion engine (18), an output pinion (64) which is connected to the third output shaft (62) in a rotationally fixed manner, the second planetary gear set (44) and the four-shaft first planetary gear set (40) are arranged in the axial direction of the transmission (38) in the following order: the internal combustion engine (18) - the output pinion (64) - the second planetary gear set (44) - the four-shaft first planetary gear set (40).

12. Motor vehicle comprising a hybrid drive system (16) according to any of the preceding claims.

## Revendications

1. Système de propulsion hybride (16) destiné à un véhicule automobile, comportant :
- un moteur à combustion interne (18) qui présente un premier arbre de sortie (24),
- un moteur électrique (28) qui présente un rotor (32) comportant un arbre de rotor (34) comme deuxième arbre de sortie, et
- une boîte de vitesses (38) qui présente un premier train planétaire (40) à quatre arbres, un second train planétaire (44), un premier élément de commutation (46a), un deuxième élément de commutation (46b), un troisième élément de commutation (46c) et un troisième arbre de sortie (62), dans lequel :
∘ le premier train planétaire (40) à quatre arbres présente un premier arbre (42a), un deuxième arbre (42b), un troisième arbre (42c) et un quatrième arbre (42d),
∘ le second train planétaire (44) présente un premier élément (48), un deuxième élément (50) et un troisième élément (52),
∘ le premier arbre (42a), le deuxième arbre (42b), le troisième arbre (42c) et le quatrième arbre (42d) peuvent tourner les uns par rapport aux autres et peuvent être reliés entre eux de manière solidaire en rotation au moyen du deuxième élément de commutation (46b),
∘ le premier arbre de sortie (24) est accouplé ou peut être accouplé de manière solidaire en rotation au premier arbre (42a),
∘ l'arbre de rotor (34) est accouplé ou peut être accouplé au deuxième arbre (42b) de telle sorte que des couples de rotation provenant de l'arbre de rotor (34) peuvent être introduits dans la boîte de vitesses (38) par l'intermédiaire du deuxième arbre (42b), et
∘ le troisième arbre (42c) peut être relié de manière solidaire en rotation au troisième arbre de sortie (62) au moyen du premier élément de commutation (46a),
dans lequel le quatrième arbre (42d) est relié ou peut être relié de manière solidaire en rotation au premier élément (48) du second train planétaire (44),
**caractérisé en ce que**
le premier arbre (42a) comprend une première roue solaire (76) du premier train planétaire (40) et le troisième arbre (42c) comprend une seconde roue solaire (78) du premier train planétaire (40).

2. Système de propulsion hybride (16) selon la revendication 1,
**caractérisé en ce que**
le second train planétaire (44) présente exactement trois éléments (48, 50, 52), à savoir le premier élément (48), le deuxième élément (50) et le troisième élément (52).

3. Système de propulsion hybride (16) selon la revendication 1 ou 2,
**caractérisé en ce que**
le premier train planétaire (40) à quatre arbres présente exactement quatre arbres (42a-d).

4. Système de propulsion hybride (16) selon l'une des revendications précédentes, **caractérisé en ce que** :
- le deuxième élément (50) peut être relié de manière solidaire en rotation à un boîtier (56) du système de propulsion hybride (16) au moyen du troisième élément de commutation (46c),
- le premier élément (48) est relié de manière solidaire en rotation au quatrième arbre (42d), et
- le troisième élément (52) est relié de manière solidaire en rotation au troisième arbre de sortie (62).

5. Système de propulsion hybride (16) selon l'une des revendications 1 à 3,
**caractérisé en ce que :**
- le deuxième élément (50) est relié de manière solidaire en rotation à un boîtier (56) du système de propulsion hybride (16),
- le premier élément (48) peut être relié de manière solidaire en rotation au quatrième arbre (42d) au moyen du troisième élément de commutation (46c), et
- le troisième élément (52) est relié de manière solidaire en rotation au troisième arbre de sortie (62).

6. Système de propulsion hybride (16) selon l'une des revendications 1 à 3,
**caractérisé en ce que :**
- le deuxième élément (50) est relié de manière solidaire en rotation à un boîtier (56) du système de propulsion hybride (16),
- le premier élément (48) est relié de manière solidaire en rotation au quatrième arbre (42d), et
- le troisième élément (52) peut être relié de manière solidaire en rotation au troisième arbre de sortie (62) au moyen du troisième élément de commutation (46c).

7. Système de propulsion hybride (16) selon l'une des revendications 4 à 6,
**caractérisé en ce que**
au total, exactement trois éléments de commutation (46a-c) sont prévus sous la forme du premier élément de commutation (46a), du deuxième élément de commutation (46b) conçu comme l'élément de commutation de blocage (46b) et du troisième élément de commutation (46c).

8. Système de propulsion hybride (16) selon l'une des revendications précédentes, **caractérisé en ce que**
le moteur électrique (28) est disposé de manière coaxiale, de manière à chevaucher axialement ainsi qu'à entourer radialement la boîte de vitesses (38).

9. Système de propulsion hybride (16) selon l'une des revendications précédentes, **caractérisé en ce que**
le deuxième arbre (42b) comprend une première couronne (82) du premier train planétaire (40) et une seconde couronne (84) du premier train planétaire (40), laquelle est reliée de manière solidaire en rotation à la première couronne (82).

10. Système de propulsion hybride (16) selon l'une des revendications précédentes, **caractérisé en ce que**
le quatrième arbre (42d) comprend un premier porte-satellites (80) du premier train planétaire (40).

11. Système de propulsion hybride (16) selon l'une des revendications précédentes,
**caractérisé en ce que**
le moteur à combustion interne (18), un pignon mené (64) qui est relié de manière solidaire en rotation au troisième arbre de sortie (62), le second train planétaire (44) et le premier train planétaire (40) à quatre arbres sont disposés dans la direction axiale de la boîte de vitesses (38) dans l'ordre suivant : le moteur à combustion interne (18) - le pignon mené (64) - le second train planétaire (44) - le premier train planétaire (40) à quatre arbres.

12. Véhicule automobile, comportant un système de propulsion hybride (16) selon l'une des revendications précédentes.
